# EUROPEAN PATENT APPLICATION

(11) **EP 4 477 812 A1**
(43) Date of publication of application: **18.12.2024**
(21) Application number: 24179209.2
(22) Date of filing: 31.05.2024
(51) Int. Cl.: E04B 1/86, E04B 1/94, E04B 1/84

(54) **ACOUSTIC AND FIRE-RETARDANT INSULATION PANEL, AND METHOD OF MANUFACTURING AN ACOUSTIC AND FIRE RETARDING INSULATION PANEL**

(30) Priority: 02.06.2023 DK PA202330060
(71) Applicant: vanDockumGROUP v/Charlotte van Dockum Davidsen, 3500 Værløse (DK)
(72) Inventor: DAVIDSEN, Torsten, 3500 Værløse (DK)
(74) Representative: Budde Schou A/S

(57) **Abstract**

The invention relates to an acoustic and fire retarding panel, comprising a backing of sound absorbing material and a number of individual and mutually spaced elongate elements of a fire-retardant material.

## Description

### TECHNICAL FIELD

The present invention relates to an acoustic and fire-retardant insulation panel having elongated gypsum elements, and a method for manufacturing a fire-retardant panel.

### BACKGROUND OF THE INVENTION

Within the technical field of acoustic paneling, it is known to manufacture acoustic panels from a backing panel of a hard material, such as wood and a number of elongated acoustic elements connected to the wooden panel. The elongated acoustic elements are typically connected to the hard wooden panel via fastening means, such as nails, clamps or screws to secure the acoustic elements to the backing panel.

However, one major factor in relation to acoustic elements is the issue with the panels suffering from insufficient fire-retardant properties.

A factor in manufacturing acoustic panels is the process of connecting and fastening the elongated acoustic elements to the backing plate. Such a process is time-consuming and hereby costly in human labor, which influences the overall cost of the acoustic panels.

The wooden panels are stiff and heavy and thereby difficult and time consuming to install and due to the stiffness of the panels, the installation is difficult if the surface for installation is not substantially planar.

Further, I order to establish the correct visual appearance of the panels, typically manufactured from wood, the individual elements of the assembled panel may be painted, foiled or veneered laminate.

It is an object of the present invention to eliminate the above disclosed issues with the known type of panels.

The above object and advantages, together with numerous other objects and advantages, which will be evident from the description of the present invention, are according to a first aspect of the present invention obtained by:
An acoustic and fire retarding insulation panel, comprising a backing of sound absorbing insulation material and a number of individual and mutually spaced elongate elements of a fire-retardant material.

The fire-retardant material may comprise a gypsum or a gypsum composite.

The acoustic panel comprises a sheet element serving as a backing panel, and made of a sound absorbing insulation material, and which is suitable to be fastened to a surface of a building where the panel is to be installed. The panel thus comprises a first side for facing the building surface, such as a wall or ceiling surface, and a second side on which a number of individual and mutually spaced elongate elements of a fire-retardant material is installed.

The backing is arranged from a material such as polyester, glass wool or rock wool, or a similar foam or fiber material which provides enhanced sound absorption and insulation.

The packing may be manufactured having various densities, thus the foam or fiber material may be more or less compact/dense. The more compact/dense the material is, the stiffer and heavier the backing is. However, it may be desired to arrange a backing having some degree of flexibility, such that the panel is lighter, easier to work with and easier to adapt to a wall curvature.

The acoustic and fire retarding insulation panel further comprises a number of individual and mutually spaced elongate elements eg. made of gypsum, such that the spaced elongated elements increase the fire protecting capabilities of the panel. The layers of elongated gypsum elements may have a thickness of 6, 12, 18, 25, 30 or 36mm etc., or any combination thereof. The thickness may however be less than 6mm or higher than 36mm. The elongated elements may be made entirely from gypsum or a gypsum composite such as a mixture of gypsum + cellulose or other additives. The composite may as an example comprise gypsum and paper granulate, or other wooden or non-wooden fibers.

It is thus understood, that throughout the description the reference to the material gypsum should be interpreted as a gypsum or a gypsum composite.

The elongated elements are preferably glued on top of the backing in a spaced relationship hereby establishing the acoustic/fire retarding panel. Preferably, the approximate entire surface (approximate 100%) of the back side of the elongated elements is glued to the surface of the backing, which increases the stiffness of the acoustic/fire retarding panel in the longitudinal direction of the elongated elements. In a most basic embodiment, at least 10% of the surface of the elongated elements is glued to the surface of the backing, but preferably more than 10%. A further effect by gluing the majority of the contact surface between the backing and the elongated elements, preferably approximate the entire contact surface, is that the panels may be cut in any direction without risking a disconnection between the backing and the elongated elements.

It is desired that the elongated elements comprise an uninterrupted layer of glue in the longitudinal direction. Arranging the glue as an uninterrupted layer of glue has proven to provide an even further increased stiffness of the panel in the longitudinal direction of the elements.

The panel preferably comprises a layer of fire retarding material between the backing and the elongated element, the material being e.g., a mat comprising air laid glass fibers.

According to a further embodiment of the first aspect of the invention, the backing is flexible, such as a polymer, a compressed rock or glass wool, or low-density wood fibers.

By the term flexible is meant that when comparing the flexible sheet to e.g., a wooden backing panel, the wooden panel is not flexible to such extend that the wooden panel may be bent to the same extend without cracking.

Arranging the backing from a flexible material such as a polymer, or a compressed rock or glass wool, produces a lightweight panel, easy to work with and easy to adapt to a non-planar wall surface. The panel thus being flexible in a direction perpendicular to the elongated elements but stiff in the longitudinal direction of the elongated elements.

According to a further embodiment of the first aspect of the invention, the individual elongated elements comprising a layer of gypsum or gypsum composite interposed between two supporting layers of e.g., paper or cardboard.

The elongated elements of gypsum are preferable arranged as a layer of gypsum positioned between two carrying layers of e.g., paper/cardboard. The elongated elements are thus built up as a construction corresponding to the construction of known plaster boards.

When manufacturing the acoustic and fire retarding panel, the elongated elements may thus be provided from standard plaster boards being cut in desired pieces hereby forming the elongated elements.

According to a further embodiment of the first aspect of the invention, the elongated elements comprising a laminate of at least two individual layers of gypsum or gypsum composite interposed between two supporting layers of e.g., paper or cardboard.

The elongated elements are preferably arranged from two or more individual gypsum elements, each being sandwiched between supporting layers of paper/cardboard and glued together.

Arranging the elongate elements as a gypsum laminate has shown to significantly increase the strength and stiffness of the elongate elements and hereby the strength and stiffness of the panel.

The increased stiffness, due to the several supporting layers of paper/cardboard which are glued together, prevents a bending of the gypsum and hereby decreases the risk of the gypsum layer breaking.

Thus, even if the outer supporting layer on the elongate elements is cut or damaged, the remaining supporting layers provide sufficient stiffness and strength to the panel. The elongated elements may comprise a single supporting layer between the individual layers of gypsum or gypsum composite, or two supporting layers glued together.

According to a further embodiment of the first aspect of the invention, the elongated elements comprise a covering layer on the supporting layer opposite the backing, or on both the supporting layer opposite the backing and the supporting layer facing the backing.

The panels preferably comprise at least one covering layers on the supporting layer opposite the backing, or on both the supporting layer opposite the backing and the supporting layer facing the backing which significantly increases the strength of the elongated elements. The covering layer may be veneered laminate, a layer of compacted laminate of fibers or a foil or other suitable materials.

According to a further embodiment of the first aspect of the invention, the elongated elements comprising a first layer of gypsum or gypsum composite having a shape complementary to a groove arranged in said backing, and a second layer of gypsum or gypsum composite extending above the surface of the backing.

The backing may in an embodiment be arranged with a series of parallel grooves,
such as U-shaped grooves, arranged for interconnection with the elongated elements. For that purpose, the elongated elements, arranged from preferably at least two layers of gypsum, are arranged such that the lower most layer of gypsum for facing the backing is shaped such that may interconnect with the groove. The lower most layer may
thus be formed such as a trapezoid, hereby forming a dovetail on the face of the elongated element which faces the backing. The lower most layer may thus have any form suitable, called locking, to be interconnected with the complementary shaped groove in the backing.

The locking may be slid into engagement with the grooves, or alternatively, interconnected with the groove as disclosed in the Danish patent application PA 2022 00382. Hereby, a fast and easy assembly, which still ensures the structural stability of the panel, is arranged.

According to a further embodiment of the first aspect of the invention, the fire-retardant material comprising an added color.

In order to provide the panel with the desired appearance, the front faces of the elongated elements may comprise a covering layer such as a wooden veneer. Other types of covering layers having various colors or patterns may be provided for creating a desired appearance.

However, as gypsum being a natural white mineral, there is the need for arranging at least the sides of the elongated element with a color different from the natural white. The spacing between elongated elements in acoustic panels are typically arranged in a dark color such as black, which gives the most contrast between the front faces of the elongated elements e.g., having a veneer pattern, and the black spacing between the elongated elements.

According to a further embodiment of the first aspect of the invention, the color being incorporated into a gypsum or gypsum composite.

In order to ensure the most uniform color of the gypsum, the color, such as a color dye or color powder, e.g., iron oxide is integrated into the gypsum hereby rendering the gypsum dyed through.

One example of making a gypsum having an integrated added color, is during the casting process of the gypsum, which correspond to the commonly known casting process of plaster boards, where a colored iron oxide power is mixed with the crushed gypsum before adding water or more preferred, the iron oxide powder, or other type of color substrate is added to the water, before adding the mix of water and color substrate the crushed gypsum, before the following casting process.

According to a further embodiment of the first aspect of the invention, said individual layers of gypsum or gypsum composite are arranged in a bond.

The two layers of gypsum are preferably glued together. The layers may be glued directly on top of each other or glued together in a bond such as in a cross lamination, whereby it is possible to produce panels having any desired height/width. The bond ensures that the panels even with relatively large heights and or widths maintains the integrity.

According to a second aspect of the present invention, the above objects and advantages are obtained by:
An acoustic and fire retarding panel, comprising an upper and lower main surface and comprising two layers of gypsum or gypsum composite, each layer of gypsum/gypsum composite interposed between two supporting layers of e.g., paper or cardboard, the panel on one side, comprising at least one groove, such as a milling, the groove having a depth extending into part of only one of the layers, such as approximate 50% of the one layer.

In one example, the layers are made from two 6mm gypsum, where the groove is a 3mm groove having a depth extending into the first layer of gypsum.

Arranging a panel made from two layers of connected gypsum/gypsum composite, e.g., glued gypsum, each layer sandwiched between two supporting layers of paper/cardboard, and where one of the layers of gypsum comprises a groove, or preferably a series of grooves, enables the production of a gypsum board having acoustic elements incorporated into the gypsum, and where, the strength of the panel is maintained due to the layered construction of gypsum comprising supporting layers.

It should be understood that the panel may comprise added color and optionally colored paper/cardboard as supporting layer, in order to create a desired visual appearance.

I should be understood that the elongated elements disclosed in relation to the first aspect of the invention, likewise may comprise a milling or series of millings, in order to create a desired appearance while at the same time, due to the gypsum laminate, maintaining the strength of the elements and the panel.

According to a third aspect of the present invention, the above objects and advantages are obtained by:
A method of manufacturing an acoustic and fire retarding panel, comprising the following steps: providing a backing, providing a number of elongated elements of gypsum or gypsum composite, gluing the elongated elements in a spaced a parallel relationship to the backing.

According to a further embodiment of the third aspect of the invention, the step of providing a number of elongated elements of gypsum or gypsum composite, comprises the step of arranging at least one of the elongated elements from two layers of gypsum, each layer having a supporting layer of e.g., paper or cardboard.

The method preferably comprises the further step of arranging a covering layer, at least on the supporting layer opposite said backing, and most preferred a covering layer on both the supporting layer opposite said backing and the supporting layer facing the backing, whereby the stiffness and strength of the elongated elements are significantly increased.

According to a further embodiment of the third aspect of the invention, said step of providing a number of elongated elements of gypsum or gypsum composite comprises the steps of providing a colored powder, such as a color iron oxide powder, in an amount of water, adding water to mineral gypsum or composite forming a mixture, arranging a layer of said mixture and allowing said layer to harden.
Fig. 1 shows a perspective view of an acoustic and fire retarding panel.
Fig. 2 shows an exploded view of a section of an acoustic and fire retarding panel.
Figs. 3-6 show cross-sections of part of an acoustic and fire retarding panel.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will thus not be described in detail with respect to the description of each figure.

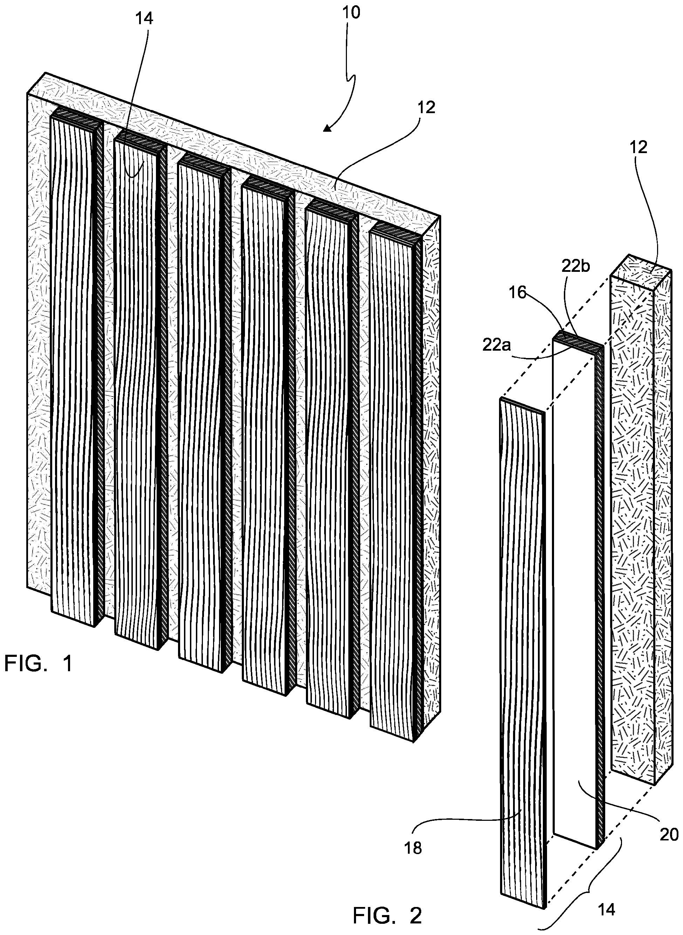

Fig. 1 shows a perspective view of an acoustic and fire retarding panel 10.

The panel 10 comprises a plate shaped backing 12 made of a material such as polyester, glass wool or rock wool. The backing 12 comprises a first side for facing the building surface, such as a wall or ceiling surface, and a second side on which a number of individual and mutually spaced elongate elements 14 of gypsum is arranged.

The elements 14 are arranged from a layer of gypsum sandwiched between two supporting layers 22a, 22b of paper/cardboard and preferably glued into the surface of the backing in a parallel and spaced relationship.

Though not shown in figure 1, the most elongated element 14 located on the right side of the panel 10 may protrude a distance to the side of the panel 10. Hereby, when two panels 10 are positioned next to each other, the left side of the backing of the first panel 10 is hidden behind the protruding part of the elongated element 14 on the second panel. The elongated elements 14 preferably comprise a covering lager 18 (shown on fig. 2) for creating the desired appearance of the panel 10. The covering layer is preferably arranged from a veneer material creating the illusion that the elongated elements 14 are made entirely from a wooden material. The covering layer 18 may be arranged from different materials and with different colors/patterns creating the desired appearance.

Fig. 2 shows an exploded view of a section of an acoustic and fire retarding panel 10. The figure shows a part of the panel 12 illustrated in figure 1, and shows the individual parts of the panel, namely the backing 10 and the elongated element 14, which in this embodiment is made up of the gypsum element 20 between two supporting layers of paper/cardboard and a covering layer 18 illustrated as a veneer. The individual elements, when connected, are preferably glued to each other.

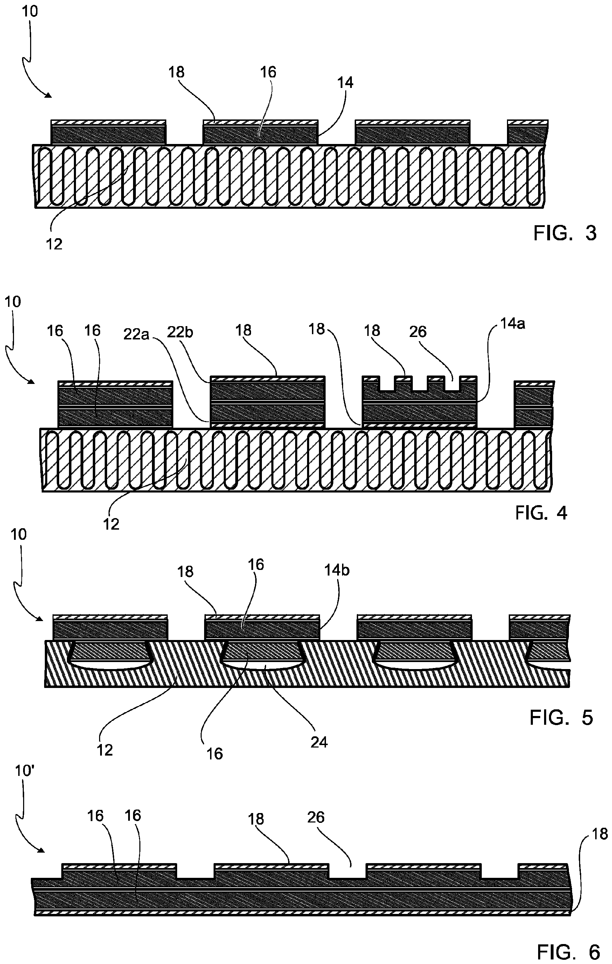

Figs. 3-6 show cross-sections of part of an acoustic and fire retarding panel 10, 10'.

Fig. 3 shows a cross-sectional view of the panel 10 shown in figs. 1 and 2.

Fig. 4 shows a part of another embodiment, where the backing 12 is arranged similar to the backing shown in figs. 1-3 but with the elongated elements 14a made from two layers of gypsum 16.

The elongated elements 14a may be arranged from two individual gypsum elements 20, each being sandwiched between covering layers of paper/cardboard and glued together, or a laminate of two layers of gypsum 16 arranged on each side of a single intermediate supporting layer of paper/cardboard and two supporting layers (22a, 22b) of paper/cardboard on the outer surfaces of the gypsum layers 16.

Arranging the elongate elements 14a as a gypsum laminate has shown to significantly increase the strength and stiffness of the elongate elements 14.

The increased stiffness, due to the several supporting layers of paper/cardboard which are glued together, prevents a bending of the gypsum 16 and hereby decreases the risk of the gypsum layer 16 breaking.

Thus, even if the outer supporting layer on the elongate elements 14 is cut or damaged, the remaining supporting layers provide sufficient stiffness and strength to the panel 10.

The elongated elements 14a are shown with a covering layer 18, made from e.g., veneered laminate, a layer of compacted laminate of fibers or a foil or other suitable materials, for further increasing the strength of the elongated elements 14a and hereby the entire panel 10. The covering layer is arranged on the side of the elongated element 14a opposite the backing but may also, as illustrated on two of the elongated elements 14a be arranged between the elongated elements 14a and the backing for even further increasing the strength of the elongated elements 14a.

The elongated elements 14a, may themselves comprise a grooving 26, arranged as a milling or cutout for generating a desired appearance of the elongated elements 14a. The grooving may be a single groove or a series of grooves but is shown as a series of grooves. Due to the supporting layers and the covering layers, it is possible to mill/cut into one of the gypsum layers without compromising the strength of the elongated element. Standard plasterboards gas the know disadvantage, that even small cuts into the board and into the gypsum leads to severe reduction of the strength of the board.

Fig. 5 shows an alternative configuration of the panel 10. The material of the backing may be arranged as disclosed in relation to figs. 1-4, but as shown in the figure, the backing comprises a series of substantially parallel longitudinal grooves 24.

The elongated elements 14b are arranged as a gypsum laminate, similar to the laminate shown in fig. 4, but the gypsum laminate facing the backing 12 having a trapezoid shape suitable to interconnection with a groove 24 in the backing.

The alternative configuration is thus suitable to be manufactured as the system disclosed in Danish patent application PA 2022 00382. Hereby, an acoustic and fire retarding panel is provided which can be manufactured in a fast and easy manner.

Though the elongated elements 14b are not glued together with the backing 12, the shape of the grooves 24 and the shape of the elongated elements 14b provide sufficient interlocking with the backing 12.

In relation to all of the embodiments shown in the figures 1-5, it should be understood that the panel may comprise a layer of fire retarding material, such as a mat of air laid glass fibers, arranged between the backing and the elongated elements. In the most basic embodiment, the panel comprises no layer of fire retarding material arranged between the backing and the elongated elements.

Fig. 6 shows a part of another alternative embodiment a panel 10'.

The panel 10' in this alternative embodiment correspond construction wise to the elongated element having grooves (26) shown in fig 4.

**The panel 10' comprises the layers of gypsum or gypsum composite, each layer hav**ing a supporting layer 22a, 22b of e.g., paper or cardboard. Both sides of the panel comprise on top of the outer supporting layers 22a, 22b another covering layer of e.g., veneered laminate, a layer of compacted laminate of fibers or a foil or other suitable materials for increasing the stiffness and structural strength of the panel.

As can be seen from the figure, the panel having two individual layers of gypsum/composite enables the provision of a groove 26 or a series of grooves 26 extending into to the panel, to approximate 50% of the thickness of one gypsum7composite layer.

The provision of the gypsum/composite layers, the supporting layers 22a, 22b and the covering layers has the effect that a gypsum or gypsum composite panel, despite of being provided with grooves maintains the overall stability and strength. It is commonly known that normal plasterboards lose a great part of the structural strength if one of the layers of cardboard/paper is cut or damaged.

In the following is given a list of reference signs that are used in the detailed description of the invention and the drawings referred to in the detailed description of the invention.
- 10, 10": Acoustic and fire retarding panel
- 12: Backing
- 14: Elongate element
- 14a: Elongate element
- 14b: Elongate element
- 16: Gypsum
- 18: Covering layer
- 20: Gypsum element
- 22a: Supporting layer
- 22b: Supporting layer
- 24: Groove
- 26: Groove

## Claims

1. An acoustic and fire retarding insulation panel (10), comprising a backing (12) of sound absorbing insulation material and a number of individual and mutually spaced elongate elements (14, 14a, 14b, 20) of a fire-retardant material.

2. An acoustic and fire retarding insulation panel (10) according to claim 1, wherein said backing (12) being flexible, such as a polymer, a compressed rock or glass wool, or low-density wood fibers.

3. An acoustic and fire retarding insulation panel (10) according to claim 1 or 2, said individual elongated elements (14, 14a, 14b, 20) comprising a layer of gypsum or gypsum composite, interposed between two supporting layers (22a, 22b) of e.g., paper or cardboard.

4. An acoustic and fire retarding insulation panel (10) according to any of the previous claims, said elongated elements (14a, 14b) comprising a laminate of at least two individual layers of gypsum (16) or gypsum composite interposed between two supporting layers (22a, 22b) of e.g., paper or cardboard.

5. An acoustic and fire retarding insulation panel (10) according to claims 3 or 4, wherein said elongated elements (14, 14a, 14b) comprises a covering layer (18) on the supporting layer (22a) opposite said backing (12), or on both said supporting layer (22a) opposite said backing and said supporting layer (22b) facing said backing.

6. An acoustic and fire retarding insulation panel (10) according to claim 4 or 5, wherein said elongated elements (14a, 14b) comprising a first layer of gypsum or gypsum composite has a shape complementary to a groove (24) arranged in said backing (12), and a second layer or gypsum or gypsum composite extending above the surface of the backing (12).

7. An acoustic and fire retarding insulation panel (10) according to any of the previous claims, said fire-retardant material composite comprising an added color.

8. An acoustic and fire retarding insulation panel (10) according to claim 7, said color being incorporated into a gypsum (16) or gypsum composite.

9. An acoustic and fire retarding insulation panel (10) according to any of claims 4-8, said individual layers of gypsum or gypsum composite are arranged in a bond.

10. An acoustic and fire retarding insulation panel (10), comprising an upper and lower main surface and comprising two layers of gypsum or gypsum composite, each layer of gypsum interposed between two supporting layers (22a, 22b) of e.g., paper or cardboard, said panel on one side, comprising at least one groove, such as a milling, said groove having a depth extending into part of only one of the layers, such as approximate 50% of the one layer.

11. A method of manufacturing an acoustic and fire retarding insulation panel (10), comprising the following steps providing a backing (12), providing a number of elongated elements (14, 14a, 14b, 20) of gypsum or gypsum composite, gluing said elongated elements in a spaced a parallel relationship to said backing.

12. A method according to claim 11, wherein said step of providing a number of elongated elements (14, 14a, 14b, 20) of gypsum or gypsum composite comprises the step of arranging at least one of said elongated elements (14a, 14b) from two layers of gypsum, each layer having a supporting layer (22a, 22B) of e.g., paper or cardboard.

13. A method according to claim 11 or 12, wherein said step of providing a number of elongated elements (14, 14a, 14b, 20) of gypsum or gypsum composite, comprising the steps of providing a colored powder, such as a color iron oxide powder, in an amount of water, adding water to mineral gypsum or composite forming a mixture, arranging a layer of said mixture and allowing said layer to harden.
